# EUROPEAN PATENT APPLICATION

(11) **EP 2 770 726 A1**
(43) Date of publication of application: **27.08.2014**
(21) Application number: 12842162.5
(22) Date of filing: 17.10.2012
(51) Int. Cl.: H04N 5/232, H04N 5/225

(54) **DISPLAY DEVICE, AND METHOD OF CONTROLLING A CAMERA OF THE DISPLAY DEVICE**

(30) Priority: 17.10.2011 KR 20110105908
(71) Applicant: LG Electronics Inc., Yeongdeungpo-gu Seoul 150-721 (KR)
(72) Inventor: KIM, Daejin, Pyeongtaek-si Gyeonggi-do 451-862 (KR); CHOI, Jonggoon, Pyeongtaek-si Gyeonggi-do 451-862 (KR); KIM, Wonsik, Pyeongtaek-si Gyeonggi-do 451-862 (KR)
(74) Representative: Katérle, Axel
(86) International application number: PCT/KR2012/008497
(87) International publication number: WO 2013/058551

(57) **Abstract**

The present invention relates to a display device, and a method of controlling a camera of the display device. A device interface includes a port physically connected to a camera. A controller detects whether the camera is connected to the port of the device interface. When the camera is connected to the port, the controller obtains camera property information on camera properties from the connected camera, and forms a camera menu using the obtained camera property information.

## Description

### [Technical Field]

The present invention relates to a display device and a method of controlling a camera of a display device, and more particularly, to a method of controlling an external camera connected to the display device.

### [Background Art]

A display device such as a broadcast receiver, a personal computer (PC), a notebook computer, a cellular phone, etc. may be configured to perform various functions. Examples of the various functions include a broadcast receiving function, a data and voice communication function, a function of capturing a still image or a moving picture through a camera, a voice storage function, a function of reproducing a music file through a speaker system, a function of displaying an image or video, etc.

In addition, a display device is configured to display a three-dimensional (3D) image as well as a two-dimensional (2D) image. A technology for displaying a 3D image uses binocular disparity principle whereby a viewer experiences a stereoscopic effect based on binocular disparity and is classified into a glass scheme, a non-glass scheme, a full 3D scheme, etc. In particular, according to the non-glass scheme, a viewing zone in which a stereoscopic effect is experienced is limited, and thus, it is necessary to determine a position of a user through a camera.

As a function of a display device is diversified, there is an increasing need for camera property in a display device, and thus, a display device with a camera mounted thereon is manufactured during manufacturing of the display device. However, a conventional display device simply controls a camera that is attached to the display device during manufacturing of the display device, but does not provide a function of controlling an external camera.

### [Disclosure]

### [Technical Problem]

An object of the present invention devised to solve the problem lies in a display device and a method of controlling an external camera of a display device.

Another object of the present invention devised to solve the problem lies in a display and a method of controlling a camera of a display device, for providing a menu of functions supported by an external camera.

Another object of the present invention devised to solve the problem lies in a display and a method of controlling a camera of a display device, for inputting a control command for controlling an external camera through a hotkey of a remote controller by a user.

### [Technical Solution]

The object of the present invention can be achieved by providing a method of controlling a camera of a display device, the method including detecting whether a camera is connected to the display device, acquiring camera property information as information about camera property from the camera when the camera is connected, and configuring a camera menu using the acquired camera property information. Here, the camera property information may include at least one of a camera property name, a current value of camera property, a minimum value of camera property, a maximum value of camera property, a step value of camera property, and an initial value of camera property.

The method may further include displaying a graphical user interface (GUI) containing the configured camera menu, receiving a camera control command through the displayed GUI, and controlling the camera according to the camera control command.

The controlling may include acquiring a current value of camera property associated with the camera control command, checking whether the acquired current value is within an adjustable range using the camera property information, and setting a value of the associated camera property according to the camera control command when the current value is within the adjustable range.

The checking may further include checking whether the current value is within the adjustable range using at least one of a type of the camera control command, and a minimum value and a maximum value of the camera property information.

The detecting may include watching whether change information in a device is present, initializing a COM interface for camera detection when the change information in the device is present, checking whether a device belonging to a video input device category is connected, checking whether the device is an actually present device when the device belonging to the video input device category is connected, and connecting the connected device and the initialized COM interface when the connected device is the actually present device.

The acquiring of the camera property information may include detecting supportable camera property using a COM interface of the camera, and acquiring detailed information about the detected camera property. Here, the detailed information may include at least one of a minimum value, a maximum value, a step value, and an initial value of the detected camera property.

In another aspect of the present invention, provided herein is a device interface including a port physically connected to a camera, and a controller for detecting whether the camera is connected to the port, for acquiring camera property information as information about camera property from the camera when the camera is connected, and for configuring a camera menu using the acquired camera property information. Here, the camera property information may include at least one of a camera property name, a current value of camera property, a minimum value of camera property, a maximum value of camera property, a step value of camera property, and an initial value of camera property.

In another aspect of the present invention, provided herein is a method of controlling a camera of a display device, the method including receiving a control signal from a remote controller, checking whether a control command indicated by the received control signal is a camera control command, checking whether a camera connected to the display device supports camera property associated with the camera control command when the control command is the camera control command, and controlling the camera based on the camera control command according to a result of the checking.

The method may further include detecting whether the camera is connected to the display device, and acquiring camera property information as information about camera property from the camera when the camera is connected. Here, the whether the camera supports the camera property associated with the camera control command may be checked using the acquired camera property information. Here, the camera property information may include at least one of a camera property name, a current value of camera property, a minimum value of camera property, a maximum value of camera property, a step value of camera property, and an initial value of camera property.

The acquiring of the camera property information may include detecting supportable camera property using a COM interface of the camera, and acquiring detailed information about the detected camera property. Here, the detailed information may include at least one of a minimum value, a maximum value, a step value, and an initial value of the detected camera property.

The controlling may include acquiring a current value of the camera property associated with the camera control command, checking whether the acquired current value is within an adjustable range using the camera property information, and setting a value of the associated camera property according to the camera control command when the current value is within the adjustable range.

The checking of the whether a control command indicated by the received control signal is a camera control command may include accessing a lookup table containing a radio frequency (RF) code, a camera control command, and association information for associating the RF code and the camera control command, and searching for a camera control command associated with an RF code of the control command from the lookup table using the association information.

In another aspect of the present invention, provided herein is a display device including a communicator for receiving a control signal from a remote controller, a controller for checking whether a control command indicated by the received control signal is a camera control command, for checking whether a camera connected to the display device supports camera property associated with the camera control command when the control command is the camera control command, and controlling the camera based on the camera control command according to a result of the checking.

### [Advantageous Effects]

According to the present invention, a display device and a method of controlling a camera of a display device may detect camera property supported by a mounted external camera from the mounted external camera when the external device is mounted on the display device and configures a menu for controlling the camera using the detected function, and thus, the display device may control a function of an external camera available from our company or another company and provide a menu of the camera. In addition, the present invention may provide a hotkey for control of an external camera on a remote controller and detect a camera control command associated with a remocon signal transmitted through the hotkey such that a user controls the external device through the hotkey of the remote controller. Accordingly, the display device may conveniently and rapidly adjust functions of the mounted external camera without display of a separate menu image.

### [Description of Drawings]

FIG. 1 is a block diagram illustrating a structure of an electronic system according to an embodiment of the present invention,
FIG. 2 is a block diagram illustrating a structure of a display device according to an embodiment of the present invention,
FIG. 3 is a diagram illustrating operations of a camera controlling method of a display device according to an embodiment of the present invention,
FIG. 4 is a diagram illustrating processes of a camera connection detection method according to an embodiment of the present invention,
FIG. 5 is a diagram illustrating processes of a camera property detecting method according to an embodiment of the present invention,
FIG. 6 is a diagram illustrating an application programming interface (API) for detection camera property,
FIG. 7 is a diagram illustrating an application programming interface (API) for detection of a range of a value of camera property,
FIG. 8 is a diagram illustrating processes of a method of providing a graphical user interface (GUI) for a camera according to an embodiment of the present invention,
FIG. 9 is a diagram illustrating a graphical user interface (GUI) for a camera according to an embodiment of the present invention,
FIG. 10 is a diagram illustrating a graphic user interface (GUI) for a camera according to another embodiment of the present invention,
FIG. 11 is a diagram of a graphical user interface (GUI) for a camera according to another embodiment of the present invention,
FIG. 12 is a diagram illustrating processes of a method of processing a camera control command according to an embodiment of the present invention,
FIG. 13 is a diagram illustrating an application is a diagram illustrating an application programming interface (API) for setting a value of camera property,
FIG. 14 is a diagram illustrating processes of a camera control of a display device according to another embodiment of the present invention,
FIG. 15 is a diagram illustrating a lookup table including an RF code associated with a remocon control command according to an embodiment of the present invention,
FIG. 16 is a diagram illustrating a guidance message according to an embodiment of the present invention,
FIG. 17 is a diagram illustrating a guidance message according to another embodiment of the present invention, and
FIG. 18 is a diagram illustrating a guidance message according to another embodiment of the present invention.

### [Best Mode]

Exemplary embodiments of the present invention will be described with reference to the attached drawings

Throughout this specification, the suffixes "module" and "unit" are used simply for convenience of description, and do not have any special meaning or function. Thus, the suffixes "module" and "unit" may be used interchangeably.

A display device as set forth herein is an intelligent display device equipped with a computer support function in addition to a broadcast reception function, for example. Thus the display device may have user-friendly interfaces such as a handwriting input device, a touchscreen, a touchpad, or a space remote controller. Further, because the display device supports wired or wireless Internet, it is capable of e-mail transmission/reception, Web browsing, banking, gaming, etc. by connecting to the Internet or a computer. To implement these functions, the display device may operate based on a standard general-purpose operating system (OS).

Various applications can be freely added to or deleted from, for example, a general-purpose OS kernel in the display device according to the present invention. Therefore, the display device may perform a number of user-friendly functions. The display device may be a network TV, a hybrid broadcast broadband TV (HbbTV), a smart TV, an open hybrid TV, etc. for example. The display device is applicable to a smart phone, a personal computer (PC), and home appliances, as needed.

Further, the embodiments of the present invention are described with reference to the accompanying drawings and the description thereof but are not limited thereto.

Although the terms used in the present invention are selected from generally known and used terms, terms used herein may be variable depending on operator's intention or customs in the art, appearance of a new technology, or the like. In addition, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meanings of each term lying within.

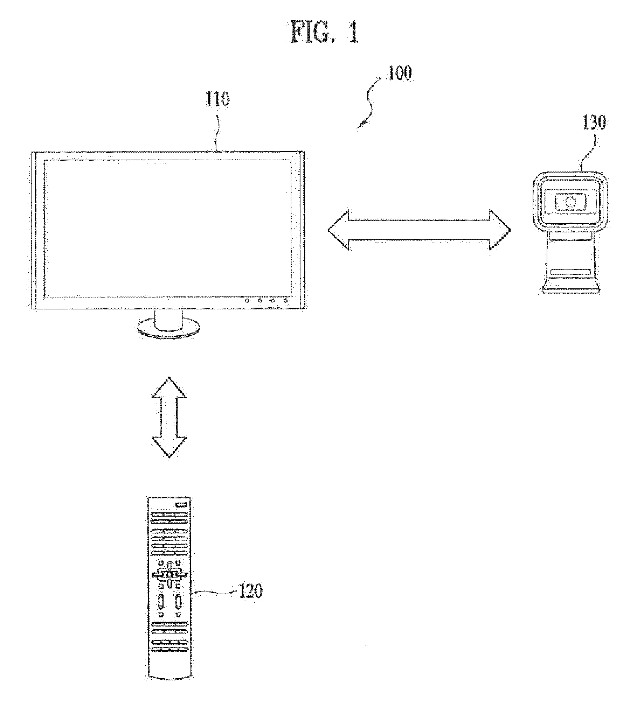

FIG. 1 is a block diagram illustrating a structure of an electronic system 100 according to an embodiment of the present invention.

Referring to FIG. 1, the electronic system 100 according to the present invention may include a display device 110, a remote controller 120, and a camera 130.

The remote controller 120 provides a hotkey for control of the camera 130. When a user pushes the hotkey, the remote controller 120 may transmit a control signal associated with a camera control command to the display device 110.

The camera 130 may be mounted on or detachably mounted on the display device 110. The camera 130 may be manufactured by a manufacturer of the display device 110 or a different manufacturer from the manufacturer of the display device 110. The camera 130 may be attached to the display device 110 during manufacturing thereof or may be a general-purpose camera connected to a port provided from the display device 110 by a user. The camera 130 may be an external camera with respect to the display device 110.

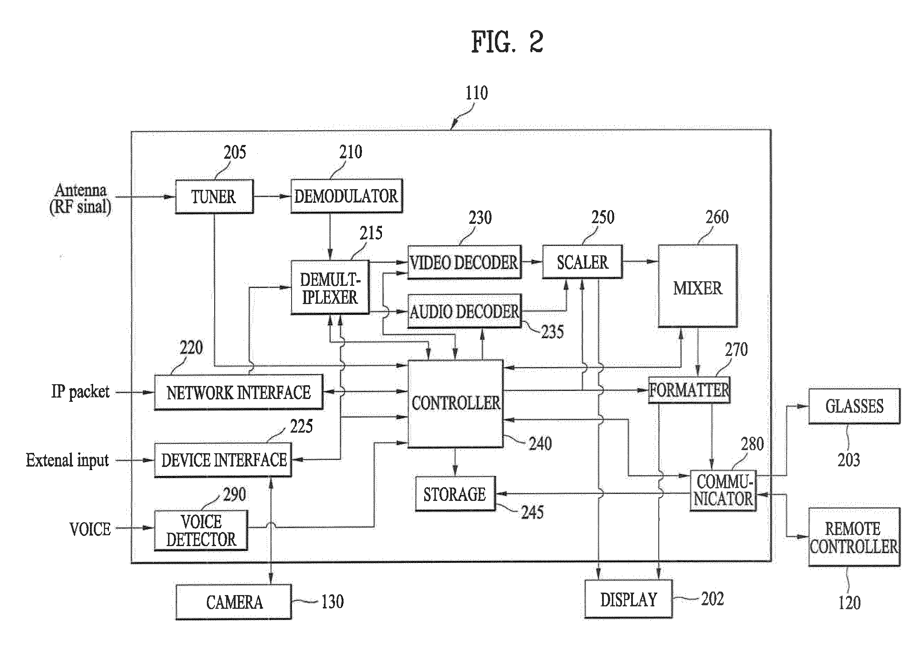

FIG. 2 is a block diagram illustrating a structure of the display device 110 according to an embodiment of the present invention.

Referring to FIG. 2, the display device 110 may include a tuner 205, a demodulator 210, a demultiplexer 215, a network interface 220, a device interface 225, a video decoder 230, an audio decoder 235, a controller 240, a storage 245, a scaler 250, a mixer 260, a formatter 270, a communicator 280, and a voice detector 290. The display device 110 may further include the camera 130, a display 202, glasses 203, and the remote controller 120. The display device 110 of FIG. 1 may be embodied using the display 202 of FIG. 2. The glasses 203 may be polarizing eyeglass or shutter eyeglasses for appreciating a stereoscopic image.

The tuner 205 selects a radio frequency (RF) broadcast signal corresponding to a channel selected by a user among RF broadcast signals received through an antenna and converts the selected RF broadcast signal into an intermediate frequency signal, a baseband image, or a voice signal.

The demodulator 210 receives a digital IF signal (DIF) converted by the tuner 205 and performs a demodulation operation.

In addition, the demodulator 210 may perform channel decoding. To this end, the demodulator 210 may include a trellis decoder, a de-interleaver, a reed solomon decoder, etc. and perform trellis decoding, deinterleaving, and reed solomon decoding.

The demodulator 210 may perform demodulation and channel decoding and then output a stream signal (TS). In this case, the steam signal may be a signal formed by multiplexing an image signal, a voice signal, or a data signal.

The demultiplexer 215 may receive the stream signal from the demodulator 210, the network interface 220, and the device interface 225. The demultiplexer 215 may demultiplex the received stream signal to an image signal, a voice signal, and a data signal to output the image signal, the voice signal, and the data signal to the video decoder 230, the audio decoder 235, and the controller 240, respectively.

The video decoder 230 receives the image signal from the demultiplexer 215 and restores the received image signal to output the image signal to the scaler 250. Here, the image signal may include a stereoscopic image signal.

The audio decoder 235 may receive the voice signal from the demultiplexer 215 and restores the received voice signal to output the restored voice to the display 202 and the scaler 250.

The network interface 220 receives packets from a network and transmits packets to the network. The network interface 220 may receive an IP packet for transmission of broadcast data from a service providing service through a network. Here, the broadcast data may be real-time broadcast service data and Internet service data. When the IP packet includes a stream signal, the network interface 220 may extract a stream signal from the IP packet and output the stream signal to the demultiplexer 215. In addition, the network interface 220 may output signals and received content to the controller 240.

The device interface 225 may provide an interface and user interface for connection between an external device and the display device 110. Here, the interface may include at least one of a universal serial bus (USB), a serial port, a parallel port, and a PS2 port. In addition, the external device may refer to various types of image or voice outputting apparatuses such as digital versatile disk (DVD), a bluray, a game console, a camcorder, a computer (a notebook computer), etc. The display device 110 may be controlled to display the image signal and voice signal received from the device interface 225 and may store and use the data signal.

In addition, the external device may be the camera 130. The camera 130 may be connected to the display device 110 through one port of a universal serial bus (USB), a serial port, a parallel port, and a PS2 port. The camera 130 may photograph a person. The camera 130 may recognize and focus a hand region of the person and zoom in and photograph the hand region. Here, the photographed hand posture may be recognized as a spatial gesture. That is, the controller 240 may recognize the photographed hand posture as the spatial gesture and execute commands for performing of operations associated with the recognized spatial gesture. Here, the spatial gesture may be defined as a gesture recognized from an image frame or image received from the camera 130, which is mapped to one or more specific computing operation.

In some embodiments, the display device 110 may include the camera 130.

The device interface 225 may include a touchpad and a touchscreen. The touchscreen may be integrated with the display 202 or may be a separate component from the display 202. When the touchscreen is integrated with the display 202, the display 202 may be called a touchscreen display. As the touchscreen is disposed in front of the display 202, a user may directly manipulate a graphical user interface (GUI) displayed on the screen. For example, the user may simply put on his or her finger on an object to be controlled.

With regard to a touchpad, the touchpad may be spaced apart from the display 202 and may be generally disposed on a different plane. For example, the display 202 is generally disposed on a vertical plane and the touchpad is generally disposed on a horizontal plane. For this reason, the touchpad is less intuitively used and thus is more difficult to use than the touchscreen.

In addition, the touchpad or the touchscreen may be a multipoint input device.

The controller 240 may recognize a touch gesture applied to the device interface 225 and control the display device 110 based on the touch gesture. Here, the touch gesture may be defined as an interaction specified with the device interface 225, which is mapped to one or more specific computing operation. The touch gesture may be performed via various hands, more particularly, via finger movement. Alternatively, the touch gesture may be performed by a stylus as well as hands. Here, an element for performing the touch gesture, such as a finger, a stylus, etc. is referred to as an object.

The device interface 225 receives the touch gesture, and the controller 240 executes commands for performing of operations associated with the touch gesture. In addition, the storage 245 may include a gesture operating program that may be a portion of an operating system (OS) or separate application. The gesture operating program recognizes occurrence of a gesture (a touch gesture or a spatial gesture) and includes a series of commands that inform one or more software agents of the gesture and/or action(s) to be performed in response to the gesture.

When a user makes one or more gestures, the device interface 225 transmits gesture information to the controller 240. The controller 240 interprets the touch gesture and control different components of the display device 110, such as the display 202, the demultiplexer 215, the network interface 220, the device interface 225, the storage 245, the scaler 250, the mixer 260, the formatter 270, the voice detector 290, etc. using the commands, more particularly, the gesture operating program from the storage 245. The gesture may be identified as commands for performing of an operation in an application stored in the storage 245, correcting a GUI object displayed on the display 202, correcting data stored in the storage 245, and performing of operations of the demultiplexer 215, the network interface 220, the scaler 250, the mixer 260, and the formatter 270. For example, these commands may be associated with zoom-in, panning, scrolling, page turning, rotation, size adjustment, image channel change, content reception, Internet access, camera control, etc.

As additional examples, the commands may be associated with determination of a channel number, determination of a human address, selection of a displayed object, drag of the displayed object, drop of the displayed object, channel conversion, display of a channel map, conversion of the displayed channel map, activation of a specific program, request for a specific GUI, opening of a file or a document, menu viewing, menu selection, command execution, log on to the Internet site system, allowance of an authorized individual to access a limited region of a computer system, loading of a user profile associated with user preference arrangement of wallpaper, increase in camera zoom, and/or the like. Here, the displayed object may include an image, channels listed in a channel map, a selection region on a GUI, a menu item, and displayed content.

Different gestures in a wide range may be used. For example, the touch gesture may be a single point or multipoint gesture, a static or dynamic gesture, a continuous or segmented gesture, and/or the like. The single point gesture is a gesture performed on a single contact point. For example, the gesture may be performed via a single gesture from one figure, a palm, or a stylus. The multipoint gesture is a gesture performed on a plurality of points. For example, the multipoint gesture may be performed via a plurality of touches from a plurality of fingers, a finger and a palm, a finger and a stylus, a plurality of styluses, and/or an arbitrary combination thereof. The static gesture does not contain any movement and the dynamic gesture contains movement. The continuous gesture is performed by a single stroke and the segmented gesture is performed by a separate step or a sequence of strokes.

In general, contact between the object and the touchscreen has various different patterns. For example, the single point gesture on the touchscreen includes a down event and an up event subsequent to the down event at the same or almost the same position as the down event. The dynamic gesture on the touchscreen includes a down event, at least one dragging event subsequent to the down event, and an event subsequent to the dragging event.

In some embodiments, a parameter is used for description of a process in which a finger approaches a touchscreen display, comes in contact with the touchscreen display, and moves away from the touchscreen display. The parameter may be at least one function of a distance between a finger and the touchscreen display, a pressure at which a finger pushes the touchscreen display, a contact area between the finger and the touchscreen, a voltage between the finger and the touchscreen, capacitance between the finger and the touchscreen, or physical parameters.

In some embodiments, according to the size of a parameter (e.g., capacitance) between a finger and a touchscreen, when the parameter exceeds a threshold value, the down event occurs, when a cursor position corresponding to the finger is moved to a position B from a position A while exceeding the threshold value, the dragging event occurs, and when the parameter is dropped below the threshold value, the up event occurs.

The controller 240 executes a command and performs an operation associated with the display device 110. For example, the controller 240 may control input and output between components of the display device 110, and reception and process of data using a command retrieved from the storage 245. The controller 240 may be embodied on a single chip, a plurality of chips, or a plurality of electronic components. For example, various architectures as well as a dedicated or embedded processor, a single-purpose processor, a controller, an ASIC, etc. may be used for the controller 240. In addition, the controller 240 may include at least one processor.

The controller 240 may detect a user action and control the display device 110 based on the user action. The user action may include selection of a physical button of a display device or a remote controller, implementation of a predetermined touch gesture or selection of a soft button on a touchscreen display, implementation of a predetermined spatial gesture recognized from an image captured by an imaging device, and implementation of predetermined phonation that is recognized by recognizing voice received by the voice detector 290. The controller 240 may interpret the user action as at least one executable command. The controller 240 may control components of the display device 110 in response to the at least one interpreted command. That is, the controller 240 may control input and output between components of the display device 110 and reception and process of data using the at least one command.

The controller 240 may detect a user action for requesting a GUI for camera control and perform control to display the GUI in response to the detection of the user action. In addition, the controller 240 detects a user action for selection of a graphic object associated with a camera control command on the GUI and executes the camera control command associated with the selected graphic object.

The controller 240 may route a packet received by the network interface 220 using at least one of an Internet protocol (IP) address and a port number contained in the packet. That is, the controller 240 may perform control to output the packet having a specific port to the demultiplexer 215 and perform control to store the packet in the storage 245.

The controller 240 may extract data contained in the packet and route the extracted data using at least one of the IP address and port number contained in the packet. That is, the controller 240 may perform control to output the data contained in the packet having the specific port to the demultiplexer 215 and perform control to store the datat in the storage 245. In addition, the controller 240 may perform control to directly process the data contained in the packet and to display the processing result on a screen.

The controller 240 may check whether an external device is connected to the device interface 225. When the camera 130 is connected to the camera 130, the controller 240 may acquire camera property information as information about camera property from a camera and configure a camera menu using the acquired camera property information. The camera property information may include at least one of a camera property name, a current value of camera property, a minimum value of camera property, a maximum value of camera property, a step value of camera property, and an initial value of camera property. Here, the camera property may include at least one of a pan adjusting function, a tilt adjusting function, a roll adjusting function, an exposure adjusting function, an iris adjusting function, a focus adjusting function and a zoom adjusting function, and a sharpness adjusting function and a gain adjusting function.

The controller 240 may execute a computer code and generate and use data together with an operating system (OS). The OS is generally known and will not be described in more detailed. Examples of the OS may include Window group OS, Unix, Linux, Palm OS, DOS, Android, Macintosh, etc. The OS, other computer code, and data may be present in the storage 245 that operates in conjunction with the controller 240.

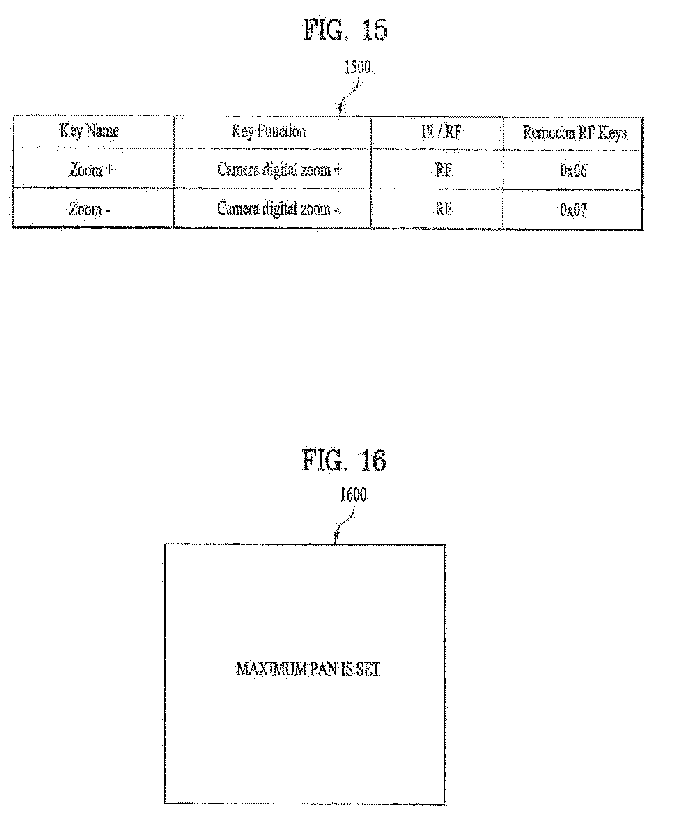

In general, the storage 245 provides a space for storing a program code and data used by the display device 110. For example, the storage 245 may store camera property information and store a lookup table including a radio frequency (RF) code, camera control command, and association information for associating the RF code and the camera control command. Here, the lookup table may be a lookup table 1500 illustrated in FIG. 15.

In addition, the storage 245 may be embodied as a read only memory (ROM), a random access memory (RAM), a hard disk drive, etc. A program code and data may be present in a removable medium and, as necessary, may be loaded or installed on the display device 110. Here, the removable medium may include a CD-ROM, a PC-CARD, a memory card, a floppy disk, a magnetic tape, and a network component.

The scaler 250 scales a signal processed by the video decoder 230 and the audio decoder 235 to an appropriate size of signal for outputting the signal through the display 202 or a speaker (not shown).

In addition, the scaler 250 adjusts and outputs a graphic interface (GUI) image an aspect ratio of a stereoscopic image, and a combination of at least two thereof according to a type or user setting of displayed content. The aspect ratio may be 21:9, 16:9, 4:3, 3:2, etc., and the scaler 250 may adjust a ratio of a horizontal length and a vertical length of a screen to a specific ratio.

The mixer 260 mixes and outputs output of the scaler 250 and the controller 240.

The formatter 270 converts image and voice signals output from the mixer 260 according to output format of the display 202. Here, the formatter 270 passes a received signal without a conversion function when a two-dimensional (2D) image is displayed. In addition, when a stereoscopic image is displayed, the formatter 270 may function as a 3D formatter for processing signals in a 3D format according to format of the stereoscopic image, an output frequency of the display 202, etc. under control of the controller 240.

In addition, the formatter 270 may output an image signal converted for obtaining a stereoscopic image to the display 202, generate a sync signal about the output stereoscopic image signal, and output the sync signal to the communicator 280. Here, the sync signal is a signal for synchronization of time of displaying a left-eye viewpoint image or a right-eye viewpoint image according to the stereoscopic image signal and time of opening or closing of a left-eye lens or a right-eye lens of the glasses 203 as shutter glasses.

The communicator 280 is a communication module that provides a bidirectional and non-directional (or omni-directional) communication means and performs wireless communication with other communication devices using a communication method according to predetermined communication standard. Here, the communication standard may be Zigbee, Bluetooth, ultra wideband (UWB), radio frequency identification (RFID), and a wireless LAN, and the communication device may be the display device 110, the glasses 203, and the remote controller 120.

The communicator 280 may include an infrared receiver for receiving infrared rays from the remote controller 120.

The voice detector 290 may receive voice and output the received voice to the controller 240. The controller 240 may recognize the voice output from the voice detector 290 and control the display device 110 based on the recognized voice.

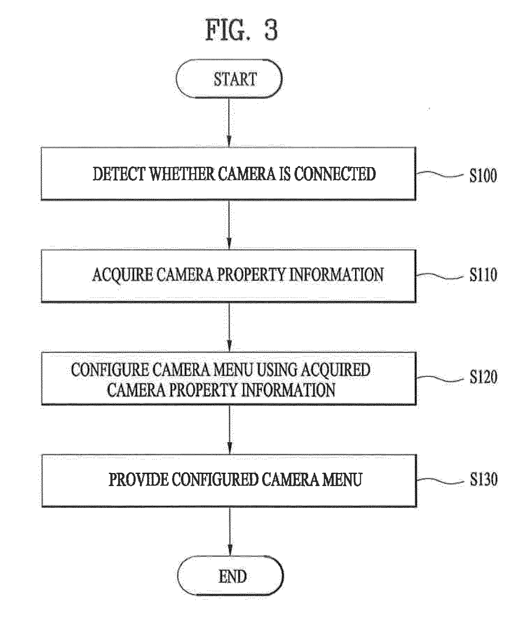

FIG. 3 is a diagram illustrating operations of a camera controlling method of a display device according to an embodiment of the present invention.

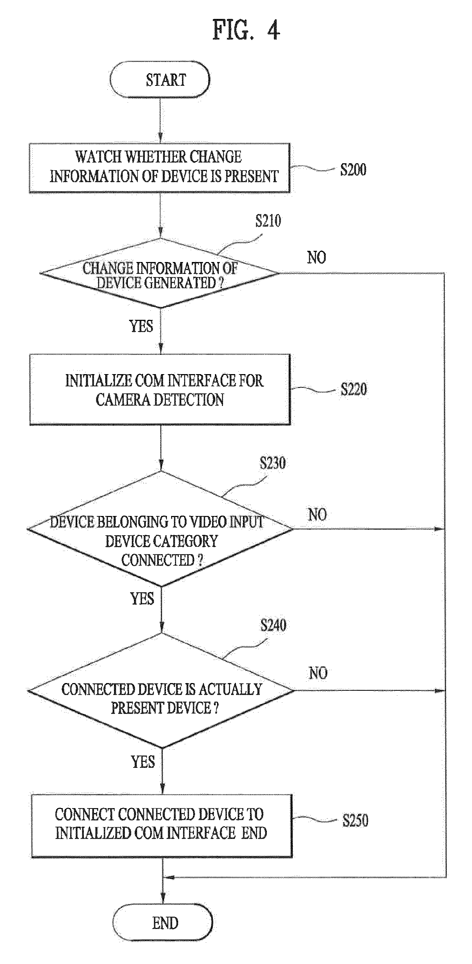

Referring to FIG. 3, the display device 110 detects whether the camera 130 is connected (S100). In some embodiments, operation S100 may include processes of a camera connection detecting method of FIG. 4.

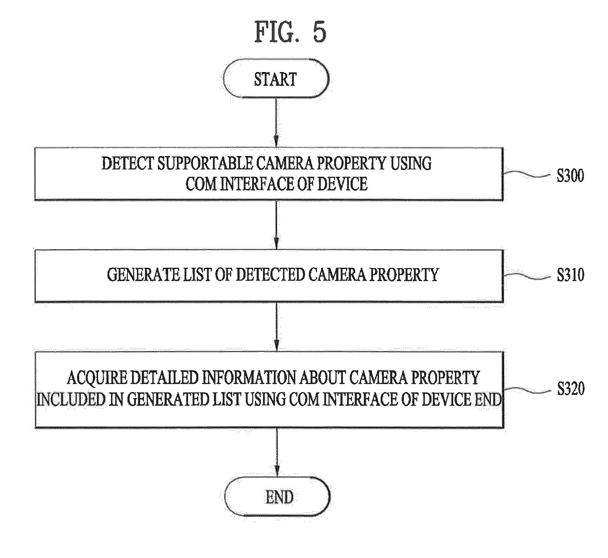

The display device 110 acquires camera property information from the camera 130 (S110). The display device 110 may acquire camera property information using a COM interface connected to the camera 130. In some embodiments, operation S110 may include processes of a camera property detecting method of FIG. 5.

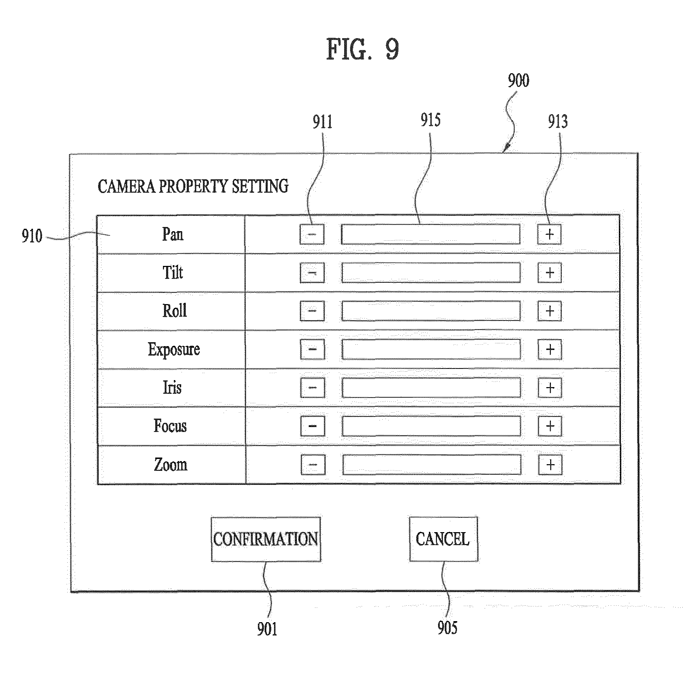

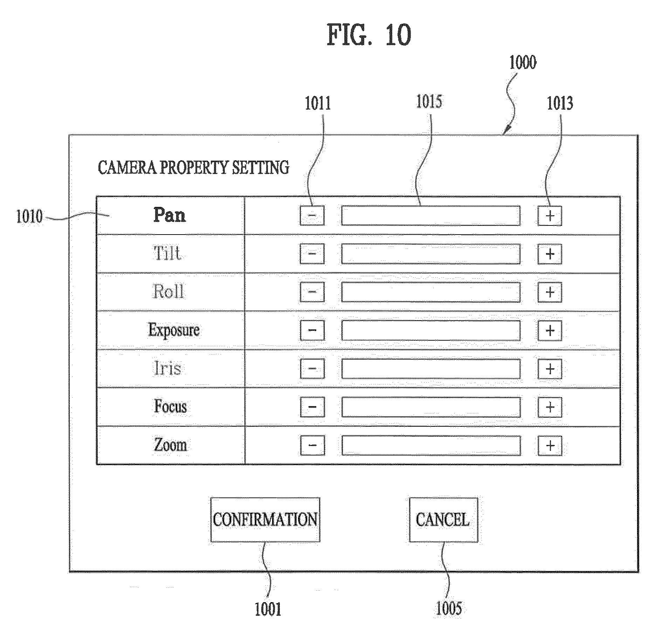

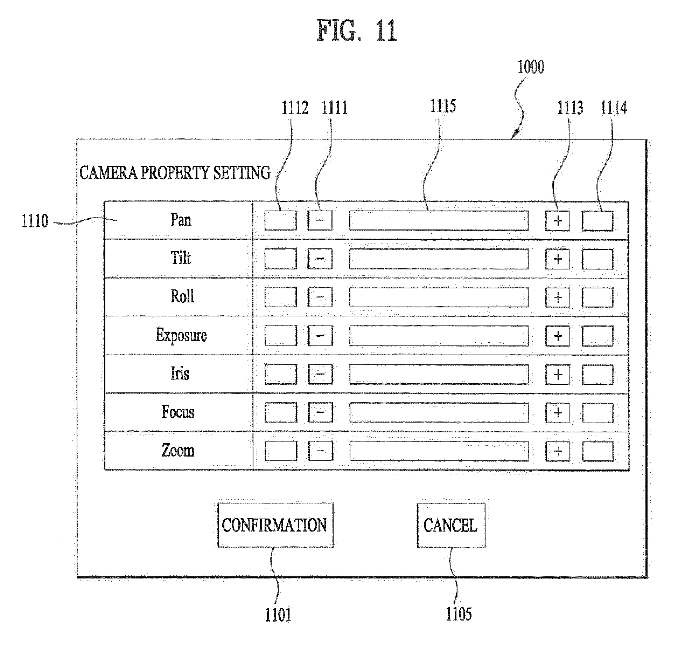

The display device 110 configures a camera menu using the acquired camera property information (S120). The configured camera menu may include menu items included in a GUI 900 of FIG. 9, a GUI 1000 of FIG. 10, and a GUI 1100 of FIG. 11.

The display device 110 provides the configured camera menu (S 130). Here, the display device 110 may display one of the GUI 900 of FIG. 9, the GUI 1000 of FIG. 10, and the GUI 1100 of FIG. 11.

FIG. 4 is a diagram illustrating processes of a camera connection detection method according to an embodiment of the present invention.

Referring to FIG. 4, the controller 240 watches whether change information in a device is present (S200). When an external device is connected to a port, the device interface 225 detects device connection information to output the detection result to the controller 240. The port may include at least one of a universal serial bus (USB), a serial port, a parallel port, and a PS2 port.

The controller 240 checks whether the change information is present (S210). The controller 240 may check the device change information using the detection result output from the device interface 225.

When the device change information is generated, the controller 240 initializes a COM interface for camera detection (S220).

The controller 240 checks whether a device belonging to a video input device category is connected (S230). Here, the controller 240 checks whether a device detected to be connected is a virtual device or an actually present device. When the detected device belongs to the video input device category, the controller 240 determines that that actually present device is connected.

When the connected device belongs to the video input device category, the controller 240 connects the connected device to an initialized COM interface (S250).

FIG. 5 is a diagram illustrating processes of a camera property detecting method according to an embodiment of the present invention.

Referring to FIG. 5, the controller 240 detects supportable camera property using a COM interface of a device (S300). Here, the controller 240 may detect the camera property using method Get of IAMCameraControl API contained in the COM interface of the device. In addition, the COM interface of the device may be an interface connected to the camera 130 in operation 420 of FIG. 4.

The controller 240 generates a list of detected camera properties (S310). For example, in operation S300, when the camera 130 supports a pan adjusting function, an exposure adjusting function, a focus adjusting function, and a zoom adjusting function, the controller 240 may generate a list including the pan adjusting function, the exposure adjusting function, the focus adjusting function, and the zoom adjusting function.

The controller 240 acquires detailed information about camera property contained in the generated list using the COM interface of the device (S320). Here, the controller 240 may acquire the detailed information about the camera property contained in the generated list using the method GetRange of IAMCameraControl API contained in the COM interface of the device.

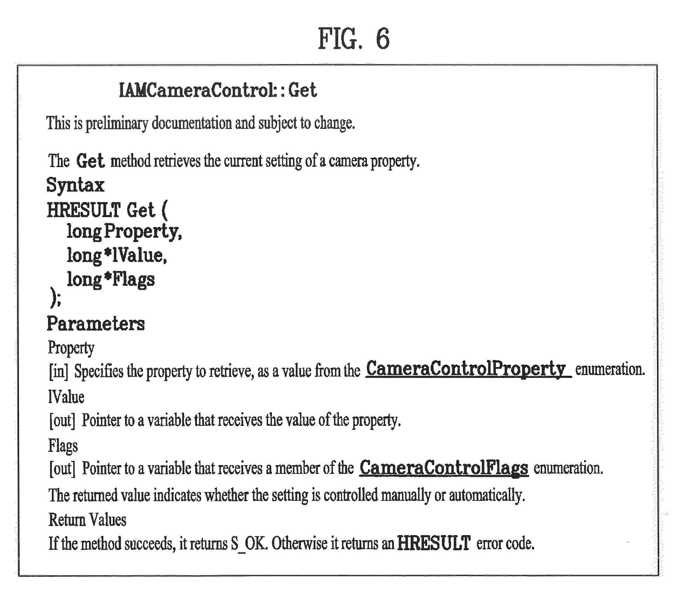

FIG. 6 is a diagram illustrating an application programming interface (API) for detection camera property.

Referring to FIG. 6, camera property provided by the camera 130 may be detected using the method Get of IAMCameraControl API included in a COM interface of a device. IAMCameraControl::Get includes Property, 1Value, and Flags as a parameter. Property specifies camera property to be searched and has a value defined in CameraControlProperty as an enumeration variable. Table 1 below shows values defined in CameraControlProperty and descriptions thereof. 1Vaue is a pointer of a variable for reception of a current value of the camera property indicated by Property, and Flags is a pointer of a variable for reception of a member of the enumeration variable CameraControlFlags.

When a function indicated by Property is successfully detected, the method Get returns S_OK. Otherwise, the method Get returns an error code.

**[Table 1]**

| Value | Description |
|---|---|
| CameraControl_Pan | Specifies the camera's pan setting, in degrees. Values range from -180 to +180, with the default set to zero. Positive values are clockwise from the origin (the camera rotates clockwise when viewed from above), and negative values are counterclockwise from the origin. |
| CameraControl_Tilt | Specifies the camera's tilt setting, in degrees. Values range from -180 to +180, with the default set to zero. Positive values point the imaging plane up, and negative values point the imaging plane down. |
| CameraControl_Roll | Specifies the camera's roll setting, in degrees. Values range from -180 to +180, with the default set to zero. Positive values cause a clockwise rotation of the camera along the image-viewing axis, and negative values cause a counterclockwise rotation of the camera. |
| CameraControl_Zoom | Specifies the camera's zoom setting, in millimeters. Values range from 10 to 600, and the default is specific to the device. |
| CameraControl_Exposure | Specifies the exposure setting, in log base 2 seconds. In other words, for values less than zero, the exposure time is 1/2n seconds, and for values zero or above, the exposure time is 2n seconds. |
| CameraControl_Iris | Specifies the camera's iris setting, in units of fstop * 10. |
| CameraControl_Focus | Specifies the camera's focus setting, as the distance to the optimally focused target, in millimeters. The range and default value are specific to the device. |

The controller 240 may execute the method Get to specify a value of CameraControlProperty indicated by each camera property by Property for each respective camera property such that the camera 130 detects whether the camera property specified by Property is supported. For example, when Property specifies CameraControl_Pan and the method Get is executed, the controller 240 may detect whether the camera 130 supports the pan adjusting function.

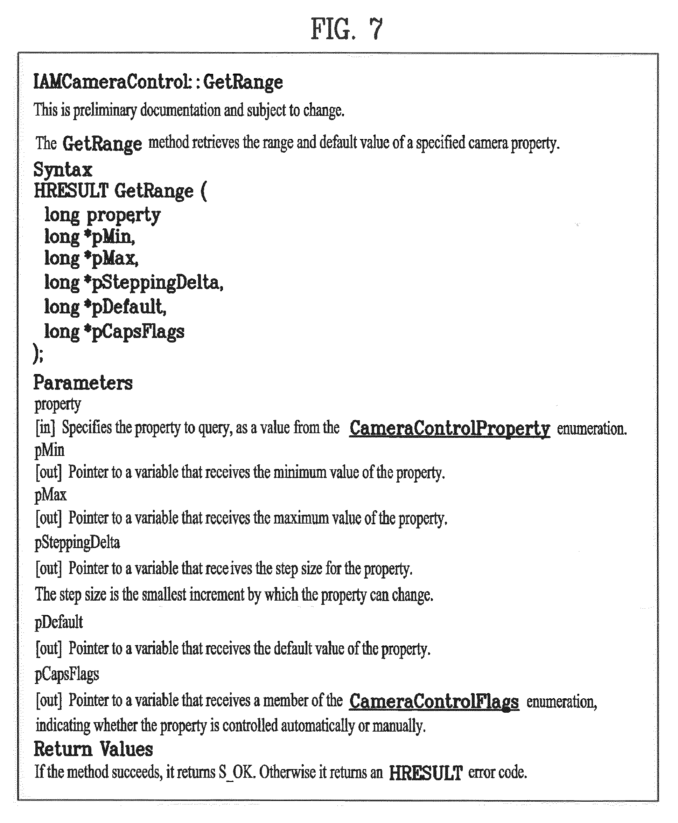

FIG. 7 is a diagram illustrating an application programming interface (API) for detection of a range of a value of camera property.

Referring to FIG. 7, the range of the camera property value acquired using the method Get of FIG. 6 may be detected using method GetRange of IAMCameraControl API included in a COM interface of a device. The method GetRange includes Property, pMin, pMax, pSteppingDelta, pDefault, and pCapsFlags as a parameter. Property is a parameter that specifies a value such as Property of the method Get, and the method GetRange detects a range of a value of the camera property indicated by Property. pMin is a pointer of a variable for reception of the camera property indicated by Property, pMax is a pointer of a maximum value of the camera property indicated by Property, pSteppingDelta is a pointer of a variable for reception of a step value of the camera property indicated by Property. In addition, pDefault is a pointer of a variable for reception of an initial value of the camera property indicated by Property, and Flags is a pointer of a variable for reception of a member of the enumeration variable CameraControlFlags.

When a value of a function indicated by Property is successfully detected, the method GetRange returns S_OK. Otherwise, the method returns an error code.

The controller 240 may generate the method GetRange for each camera property included in the list generated in operation S310 to acquire detailed information about each camera property.

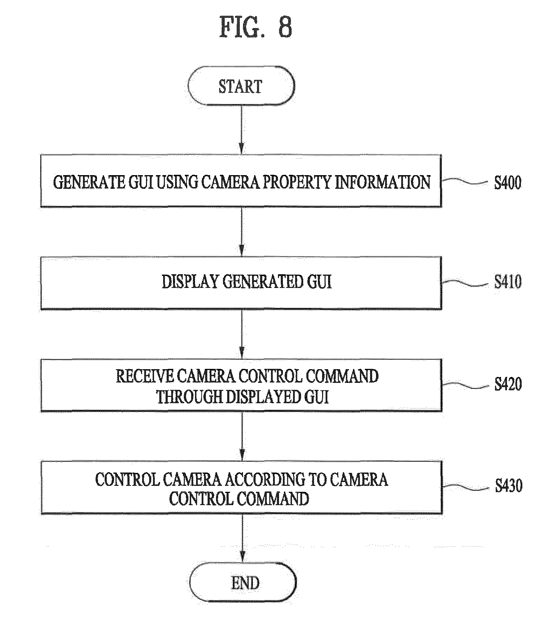

FIG. 8 is a diagram illustrating processes of a method of providing a graphical user interface (GUI) for a camera according to an embodiment of the present invention.

Referring to FIG. 8, the controller 240 generates a graphic user interface (GUI) using camera property information (S400). Here, the controller 240 may generate the GUI 900 of FIG. 9, the GUI 1000 of FIG. 10, and the GUI 1100 of FIG. 11.

The display 202 displays the GUI generated by the controller 240 (S410). Here, the display 202 may display one of the GUI 900 of FIG. 9, the GUI 1000 of FIG. 10, and the GUI 1100 of FIG. 11. In addition, upon detection of a user action for requesting display of a GUI for camera control, the controller 240 may control the display 202 to display the GUI generated in operation S400 in response to the detection of the user action.

The controller 240 receives a camera control command through a GUI displayed by the display 202 (S420). The camera control command may be a command for requesting adjustment of a value of camera property.

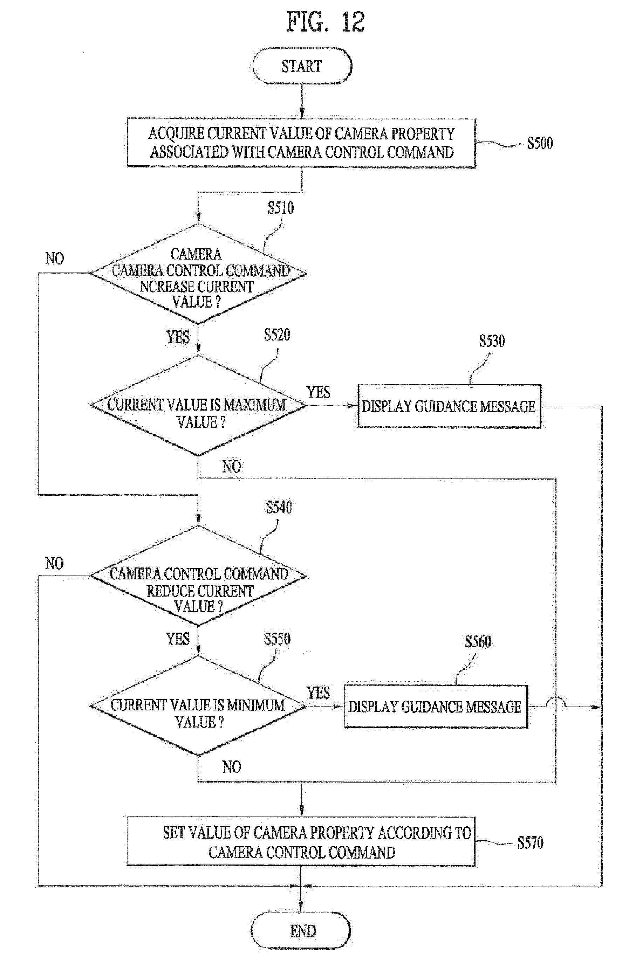

The controller 240 controls a camera according to the camera control command (S430). In some embodiments, operation S430 may include processes of a method of processing a camera control command of FIG. 12.

FIG. 9 is a diagram illustrating a graphical user interface (GUI) 900 for a camera according to an embodiment of the present invention.

Referring to FIG. 9, the display 202 may display the GUI 900. The GUI 900 may display functions supported by the camera 130. Pan, Tilt, Roll, Exposure, Iris, Focus, and Zoom displayed on the GUI 900 indicate the camera properties supported by the camera 130. The GUI 900 includes a setting region 915 indicating a setting value of an associated function, a down button 911 for reduction in the setting value, and an up button 913 for increase in a current value, and includes a confirmation button 901 and a cancel button 905. The function associated with the setting function refers to a function positioned in the same row as the setting region 915.

The setting region 915 displays a current value of Pan 910 as the associated function as a setting value at a point of time when the GUI 900 is displayed. When the down button 911 is pushed, the setting region 915 displays a value obtained by reducing a step value from the current value. In addition, when the up button 913 is pushed, the setting region 910 displays a value obtained by increasing a step value from the current value.

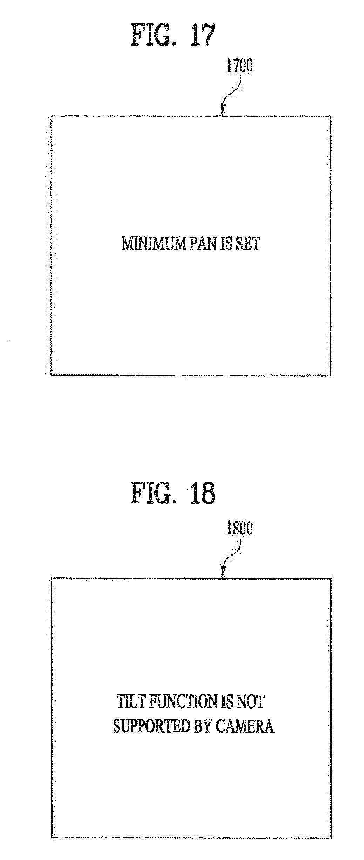

In some embodiments, the setting region 915 displays the current value of the Pan 910 as the associated function as the setting value at a point of time when the GUI 900 is displayed. When the down button 911 is pushed, if the current value is not a minimum value, the setting region 915 displays a value obtained by reducing a step value from the current value, and if the current value is the minimum value, the setting region 915 displays the current value without change. In addition, when the current value is the minimum value, the display 202 may display a guidance message indicating that a value of camera property is not reduced any more. Here, the guidance display may be a message 1700 of FIG. 17.

When the up button 913 is pushed, if the current value is not a maximum value, the setting region 915 displays a value obtained by increasing a step value from the current value, and if the current value is the maximum value, the setting region 915 displays the current value without change. In addition, when the current value is a maximum value, the display 202 may further display a guidance message indicating that the value of the camera property cannot be increased any more. Here, the guidance message may be a message 1600 of FIG. 16.

When the confirmation button 901 is pushed, if a setting value displayed on the setting region 915 is changed from the current value, the controller 240 executes a camera control command to make the value of the function associated with the setting region 915 to the setting value. In addition, when the cancel button 905 is pushed, the controller 240 performs control to stop display of the GUI 900 without execution of the camera control command.

In some embodiments, the display 202 may display a GUI that does not contain a setting region from the GUI 900.

FIG. 10 is a diagram illustrating a graphic user interface (GUI) 1000 for a camera according to another embodiment of the present invention.

Referring to FIG. 10, the display 202 may display the GUI 1000. During display of the GUI, the GUI 1000 may activates a function supported by the camera 130 and inactivates a function that is not supported by the camera 130. As seen from FIG. 10, the function supported by the camera 130 on the GUI 1000 may be Pan, Exposure, Focus, and Zoom, and the function that is not supported by the camera 130 may be Tilt, Roll, and Iris.

The GUI 1000 includes a setting region 1015 indicating a setting value of an associated function, a down button 1011 for reduction in the setting value, and an up button 1013 for increase in a current value, and includes a confirmation button 1001 and a cancel button 1005. Here, the function associated with the setting function refers to a function positioned in the same row as the setting region 915. For example, the function associated with the setting region 1015 is Pan 1010.

The down button 1011, the setting region 1015, the up button 1013, the confirmation button 1001, and the cancel button 1005 perform the same functions as the down button 911, the setting region 915, the up button 913, the confirmation button 901, and the cancel button 905 of FIG. 9, and thus, a detailed description thereof will be omitted.

In some embodiments, the display 202 may display a GUI that does not include a setting region from the GUI 1000.

FIG. 11 is a diagram of a graphical user interface (GUI) 1100 for a camera according to another embodiment of the present invention.

Referring to FIG. 11, the display 202 may display the GUI 1100. The GUI 1100 displays functions supported by the camera 130. Pan, Tilt, Roll, Exposure, Iris, Focus, and Zoom on the GUI 1100 are camera properties supported by the camera 130. The GUI 1100 includes a setting region 1115 indicating a setting value of an associated function, a down button 1111 for reduction in the setting value, an up button 1113 for increase in the current value, and a minimum region and a maximum region, and includes a confirmation button 1101 and a cancel button 1105. The function associated with the setting function refers to a function positioned in the same row as the setting region 1115. For example, the function associated with the setting region 1115 is Pan 1110.

The setting region 1115 displays a current value of the Pan 1110 as the associated function as a setting value at a point of time when the GUI 1100 is displayed. When the down button 1111 is pushed, the setting region 1115 displays a value obtained by reducing a step value from the current value. In addition, when the up button 1113 is pushed, the setting region 1115 displays a value obtained by increasing a step value from the current value.

In some embodiments, the setting region 1115 displays the current value of the Pan 1110 as the associated function as the setting value at a point of time when the GUI 1100 is displayed. When the down button 1111 is pushed, if the current value is not a minimum value, the setting region 1115 displays a value obtained by reducing a step value from the current value, and if the current value is the minimum value, the setting region 1115 displays the current value without change. In addition, when the current value is the minimum value, the display 202 may display a guidance message indicating that a value of camera property is not reduced any more. Here, the guidance display may be the message 1700 of FIG. 17.

When the up button 1113 is pushed, if the current value is not a maximum value, the setting region 1115 displays a value obtained by increasing a step value from the current value, and if the current value is the maximum value, the setting region 1115 displays the current value without change. In addition, when the current value is a maximum value, the display 202 may further display a guidance message indicating that the value of the camera property cannot be increased any more. Here, the guidance message may be the message 1600 of FIG. 16.

A minimum region 1112 displays a minimum value of the Pan 1110 as the associated function, and a maximum region 1114 displays a maximum function of the Pan 1110 as the associated function.

When the confirmation button 1101 is pushed, if a setting value displayed on the setting region 1115 is changed from the current value, the controller 240 executes a camera control command to make the value of the function associated with the setting region 1115 to the setting value. When the cancel button 1105 is pushed, the controller 240 performs control to stop display of the GUI 1100 without execution of the camera control command.

In some embodiments, the display 202 may display a GUI that does not contain a setting region from the GUI 1100.

In some embodiments, the display 202 may display the GUI 1100 in which a function supported by the camera 130 is activated and a function that is not supported by the camera 130 is inactivated.

FIG. 12 is a diagram illustrating processes of a method of processing a camera control command according to an embodiment of the present invention.

Referring to FIG. 12, the controller 240 acquires a current value of camera property associated with a camera control command (S500).

The controller 240 checks whether the camera control command increases a current value of the camera property (S510).

When the camera control command increases the current value of the camera property, the controller 240 checks whether the current value of the camera property associated with the camera control command is a maximum value (S520). Here, the current value and the maximum value may be detected from camera property information stored in the storage 245. In addition, the current value may be detected from the camera 130 using the method Get illustrated in FIG. 6 and the maximum value may be detected from the camera 130 using the method GetRange illustrated in FIG. 7.

When the current value is a maximum value, the display 202 displays a guidance message (S530). Here, the guidance message may be a message indicating that the current value is the maximum value. For example, the guidance message may be the guidance message 1600 of FIG. 16.

When the current value is not the maximum value, the controller 240 performs control to increase a value of the camera property associated with the camera control command according to the camera control command (S570). Here, the increased size may be a step value of the camera property. Here, the step value may be detected from camera property information stored in the storage 245 or may be detected from the camera 130 using the method GetRange illustrated in FIG. 7.

When the camera control command does not increase the current value of the camera property, the controller 240 checks whether the camera control command reduces the current value of the camera property (S540). In some embodiments, operations S510 and S540 may be simultaneously performed.

When the camera control command reduces the current value, the controller 240 checks whether the current value of the camera property associated with the camera control command is a minimum value (S550).

When the current value is the minimum value, the display 202 displays a guidance message (S560). Here, the guidance message may be a message indicating that the current value is the minimum value. For example, the guidance message may be the message 1700 of FIG. 17.

When the current value is the minimum value, the controller 240 performs control to reduce and set the value of the camera property associated with the camera control command according to the camera control command (S570). Here, the reduced size may be a step value of camera property.

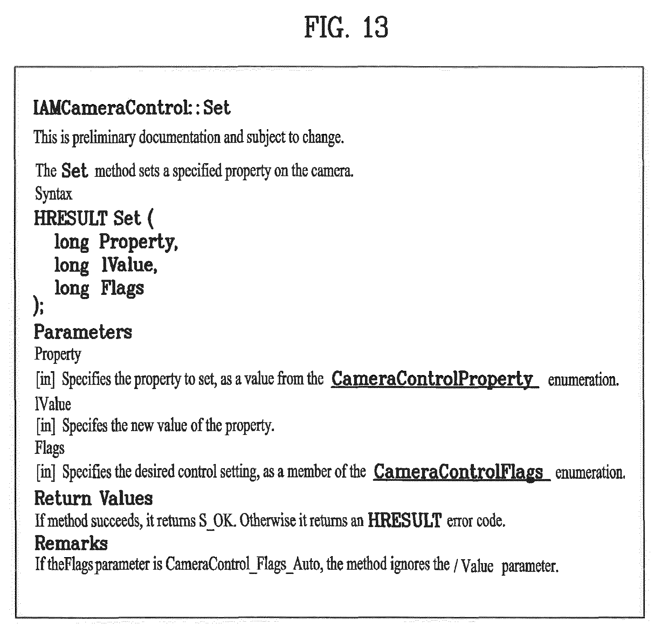

FIG. 13 is a diagram illustrating an application is a diagram illustrating an application programming interface (API) for setting a value of camera property.

Referring to FIG. 13, the controller 240 may set the value of the camera property using method Set of methods of IAMCameraControl API contained in a COM interface of a device. The method Set includes Property and 1Value as a parameter. Property is a parameter such as Property of the method Get, and the method Set sets the value indicated by Property to a value specified by 1Value. 1Value specifies a new value (setting value) of a function indicated by Property. Flags is a pointer of a variable for reception of a member of the enumeration variable CameraControlFlags.

When a function indicated by Property is successfully set, the method Set returns S_OK. Otherwise, the method Set returns an error code.

The controller 240 may perform control to specify adjusted camera property by Property, to specify a set value by 1Value, and to execute the method Set to adjust a value of property of the camera 130 according to a camera control command.

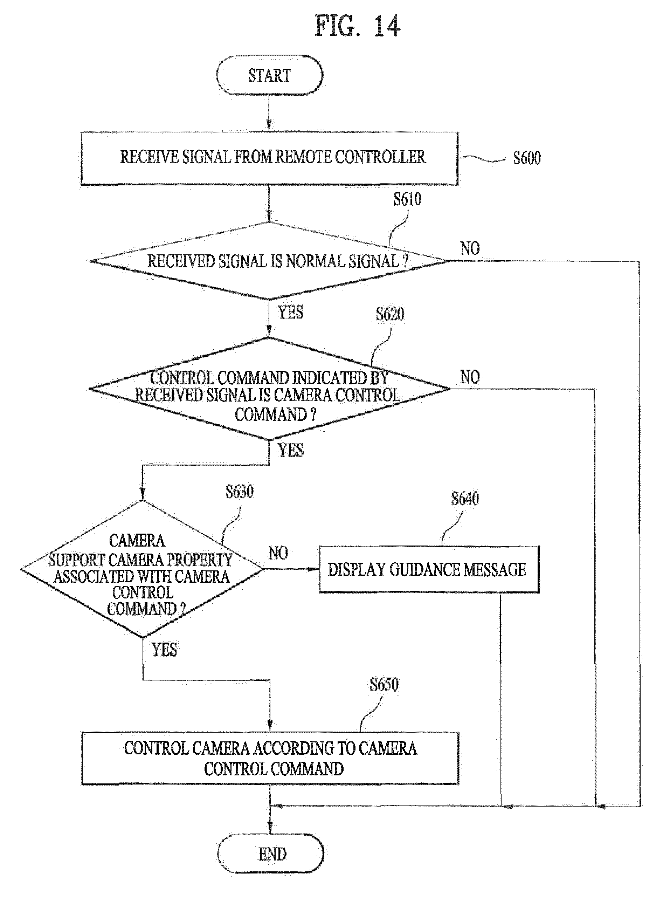

FIG. 14 is a diagram illustrating processes of a camera control of a display device according to another embodiment of the present invention.

Referring to FIG. 14, the communicator 280 receives a signal from the remote controller 120 (S600). The remote controller 120 may include a hotkey for adjustment of camera property. That is, the remote controller 120 may include a hotkey for increase in a current value of the camera property and a hotkey for reducing the current value of the camera property. For example, the remote controller 120 may include a hotkey for a pan adjusting function, a tilt adjusting function, a roll adjusting function, an exposure adjusting function, an iris adjusting function, a focus adjusting function and a zoom adjusting function, and a sharpness adjusting function and a gain adjusting function.

When a user pushes the hotkey, the remote controller 120 may transmit a signal associated with the hotkey to the display device 110.

The controller 240 checks whether a signal received from the remote controller 120 is a normal signal (S610).

When the received signal is a normal signal, the controller 240 checks whether a control command indicted by the received signal is a camera control command (S620). Here, the controller 240 may check whether the control command is the camera control command using a lookup table. That is, the controller 240 may access the lookup table stored in the storage 245 and searches for a camera control command associated with an RF code of the control command from the accessed lookup table.

When the control command is the camera control command, whether camera property associated with the camera control command is supported by the camera 130 is checked (S630). Here, the controller 240 may check whether the camera property is supported using the method Get illustrated in FIG. 6 and check whether the camera property is supported using the camera property information stored in the storage 245.

When the camera 130 does not support the camera property, the display 202 displays a guidance message (S640). Here, the guidance message may be a message indicating that the camera property is not supported by the camera 130. For example, the message may be a guidance message 1800 illustrated in FIG. 18.

When the camera 130 supports the camera property, the controller 240 controls the camera 130 according to a camera control command (S570). In some embodiments, operation S570 may include processes of the method of processing a camera control command of FIG. 12.

FIG. 15 is a diagram illustrating a lookup table including an RF code associated with a remocon control command according to an embodiment of the present invention.

Referring to FIG. 15, the lookup table 1500 includes Key Name, Key Function, remocon RF form (infrared rays (IR) or radio frequency (RF)) and Remocon RF Keys, and includes association information for associating these. Remocon RF Keys may be RF codes of a control command indicated by remocon RFs. In addition, Remocon RF Key may be information indicating a row of the association information. For example, zoom-in (Zoom+) is positioned at a first row and is associated with a remocon RF key 0x06. When an RF code of a control command indicated by a received remocon RF indicates 0x0, the controller 240 checks that the receive remocon RF indicates a camera zoom-in command.

The display device and the method of controlling the same according to one embodiment are not limited to the configurations and methods of the above-described embodiments. That is, the above-described embodiments may be partially or wholly combined to make various modifications.

The invention can also be embodied as processor readable codes on a processor readable recording medium. The processor readable recording medium is any data storage device that can store data which can be thereafter read by a processor. Examples of the processor readable recording medium include read-only memory (ROM), random-access memory (RAM), CD-ROMs, magnetic tapes, floppy disks, optical data storage devices, carrier wave such as transmission via the Internet, etc. The processor readable recording medium can also be distributed over network coupled computer systems so that the processor readable code is stored and executed in a distributed fashion.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

### [Mode for Invention]

Various embodiments have been described in Best Mode above, and thus, a repeated explanation thereof will not be given. In addition, additional modifications can be made by those of skill in the art with reference to Best Mode above.

### [Industrial Applicability]

The present invention is applicable to technologies related to a display device and a camera controlling method of a display device.

## Claims

1. A method of controlling a camera of a display device, the method comprising:
detecting whether a camera is connected to the display device;
acquiring camera property information as information about camera property from the camera when the camera is connected; and
configuring a camera menu using the acquired camera property information.

2. The method according to claim 1, further comprising:
displaying a graphical user interface (GUI) containing the configured camera menu;
receiving a camera control command through the displayed GUI; and
controlling the camera according to the camera control command.

3. The method according to claim 2, wherein the controlling comprises:
acquiring a current value of camera property associated with the camera control command;
checking whether the acquired current value is within an adjustable range using the camera property information; and
setting a value of the associated camera property according to the camera control command when the current value is within the adjustable range.

4. The method according to claim 3, wherein the checking further comprises checking whether the current value is within the adjustable range using at least one of a type of the camera control command, and a minimum value and a maximum value of the camera property information.

5. The method according to claim 1, wherein the camera property information comprises at least one of a camera property name, a current value of camera property, a minimum value of camera property, a maximum value of camera property, a step value of camera property, and an initial value of camera property.

6. The method according to claim 1, wherein the detecting comprises;
watching whether change information in a device is present;
initializing a COM interface for camera detection when the change information in the device is present;
checking whether a device belonging to a video input device category is connected; checking whether the device is an actually present device when the device belonging to the video input device category is connected; and
connecting the connected device and the initialized COM interface when the connected device is the actually present device.

7. The method according to claim 1, wherein the acquiring of the camera property information comprises:
detecting supportable camera property using a COM interface of the camera; and
acquiring detailed information about the detected camera property.

8. The method according to claim 7, wherein the detailed information comprises at least one of a minimum value, a maximum value, a step value, and an initial value of the detected camera property.

9. A display device comprising:
a device interface comprising a port physically connected to a camera; and
a controller for detecting whether the camera is connected to the port, for acquiring camera property information as information about camera property from the camera when the camera is connected, and for configuring a camera menu using the acquired camera property information.

10. A method of controlling a camera of a display device, the method comprising:
receiving a control signal from a remote controller;
checking whether a control command indicated by the received control signal is a camera control command;
checking whether a camera connected to the display device supports camera property associated with the camera control command when the control command is the camera control command; and
controlling the camera based on the camera control command according to a result of the checking.

11. The method according to claim 10, wherein the whether the camera supports the camera property associated with the camera control command is checked using a COM interface of the camera.

12. The method according to claim 10, further comprising:
detecting whether the camera is connected to the display device; and
acquiring camera property information as information about camera property from the camera when the camera is connected,
wherein the whether the camera supports the camera property associated with the camera control command is checked using the acquired camera property information.

13. The method according to claim 12, wherein the acquiring of the camera property information comprises:
detecting supportable camera property using a COM interface of the camera; and
acquiring detailed information about the detected camera property.

14. The method according to claim 13, wherein the detailed information comprises at least one of a minimum value, a maximum value, a step value, and an initial value of the detected camera property.

15. The method according to claim 10, wherein the controlling comprises:
acquiring a current value of the camera property associated with the camera control command;
checking whether the acquired current value is within an adjustable range using the camera property information; and
setting a value of the associated camera property according to the camera control command when the current value is within the adjustable range.

16. The method according to claim 10, wherein the checking of the whether a control command indicated by the received control signal is a camera control command comprises:
accessing a lookup table containing a radio frequency (RF) code, a camera control command, and association information for associating the RF code and the camera control command; and
searching for a camera control command associated with an RF code of the control command from the lookup table using the association information.

17. A display device comprising:
a communicator for receiving a control signal from a remote controller; and
a controller for checking whether a control command indicated by the received control signal is a camera control command, for checking whether a camera connected to the display device supports camera property associated with the camera control command when the control command is the camera control command, and controlling the camera based on the camera control command according to a result of the checking.
